# EUROPEAN PATENT APPLICATION

(11) **EP 4 751 822 A1**
(43) Date of publication of application: **03.06.2026**
(21) Application number: 24845222.9
(22) Date of filing: 07.06.2024
(51) Int. Cl.: B21D 24/00, B21D 22/20

(54) **MOLDING DEVICE, MOLDING SYSTEM, AND METAL PIPE**

(30) Priority: 26.07.2023 JP 2023121418
(71) Applicant: Sumitomo Heavy Industries, Ltd., Tokyo 141-6025 (JP)
(72) Inventor: NOGIWA Kimihiro, Yokosuka-shi, Kanagawa 237-8555 (JP); FUKUDA Masanori, Niihama-shi, Ehime 792-8588 (JP)
(74) Representative: Louis Pöhlau Lohrentz
(86) International application number: PCT/JP2024/020915
(87) International publication number: WO 2025/022840

(57) **Abstract**

A forming device includes a first die and a second die for forming a metal material, in which the first die and the second die have a quenching mode adjustment region that adjusts a quenching mode of at least a partial region of the metal material, and in the quenching mode adjustment region, one die of the first die and the second die is provided with a quenching mechanism that only performs quenching on the metal material, and the other die of the first die and the second die is provided with a non-quenching mechanism that does not perform the quenching on the metal material.

## Description

### Technical Field

The present disclosure relates to a forming device, a forming system, and a metal pipe.

### Background Art

In the related art, a forming device disclosed in PTL 1 has been known as a forming device that forms a metal material. The forming device forms a component having a desired shape by pressing the metal material.

### Citation List

### Patent Literature

[PTL 1] Japanese Unexamined Patent Publication No. 2013-188793

### Summary of Invention

### Technical Problem

A formed product formed by the forming device described above is used in order to construct a predetermined structure. For example, the formed product may be joined to another member by welding. In this case, a non-quenching portion that is not quenched may be provided at a portion in which welding is performed, while the entire formed product is quenched to ensure strength. As a result, the strength of the non-quenching portion is reduced, and welding is easily performed.

However, in a case where the non-quenching portion is provided as described above, the strength is reduced over the entire circumference including the welded portion. The deformation may be concentrated at the portion, which may result in insufficient component strength.

Therefore, an object of the present disclosure is to provide a forming device, a forming system, and a metal pipe that can improve the strength of the formed product.

### Solution to Problem

One aspect of the present disclosure relates to a forming device including a first die and a second die for forming a metal material, in which the first die and the second die have a quenching mode adjustment region that adjusts a quenching mode of at least a partial region of the metal material, and in the quenching mode adjustment region, one die of the first die and the second die is provided with a quenching mechanism that only performs quenching on the metal material, and the other die of the first die and the second die is provided with a non-quenching mechanism that does not perform the quenching on the metal material.

In the forming device, the first die and the second die have the quenching mode adjustment region that adjusts the quenching mode of at least a partial region of the metal material. As a result, it is possible to adjust the strength of the formed product. Specifically, in the quenching mode adjustment region, one die of the first die and the second die is provided with the quenching mechanism that performs the quenching on the metal material, and the other die of the first die and the second die is provided with the non-quenching mechanism that does not perform the quenching on the metal material. The quenching mechanism can increase the strength by performing the quenching on the metal material. The non-quenching mechanism can form a portion having low strength in a partial manner depending on the application by not performing the quenching on the metal material. Therefore, in the formed product, the strength can be reduced at a portion in which the strength is preferably reduced in a partial manner, such as a welded portion, and high strength can be ensured by performing the quenching at the other portions. As described above, it is possible to improve the strength of the formed product.

The quenching mode adjustment region may be provided at a position corresponding to an end portion of the metal material in a longitudinal direction. Since the welded portion or the like is easily formed at the end portion of the formed product, the strength can be adjusted at the position.

The non-quenching mechanism may be formed by a heating unit provided in the other die. As a result, the formed product is inhibited from being rapidly cooled at the portion of the non-quenching mechanism, and the quenching is inhibited.

The first die and the second die may have a pair of main surfaces facing each other and a pair of side surfaces in the quenching mode adjustment region, and the non-quenching mechanism may not perform the quenching on one of the main surfaces and the pair of side surfaces. In this case, it is possible to improve the weldability between the side surfaces and the mating member.

Another aspect of the present disclosure relates to a forming system including: the forming device described above; and a removal device that removes a surface of a formed product facing a non-quenching portion formed by the non-quenching mechanism. As a result, when the welded portion is formed at the non-quenching portion, a welding tool can be easily inserted by removing the facing surface.

Still another aspect of the present disclosure relates to a metal pipe including: a pipe portion having a pair of main surfaces and a pair of side surfaces, in which one of the main surfaces of the pipe portion is provided with a quenching portion and a non-quenching portion along an axial direction of the pipe portion, and the other of the main surfaces of the pipe portion is provided with only the quenching portion along the axial direction. In this case, in the metal pipe, at the one of the main surfaces, the strength can be reduced at a portion in which the strength is preferably reduced in a partial manner, such as the welded portion, as the non-quenching portion, and the other portions can be formed as the quenching portion, so that the high strength can be ensured. In addition, by configuring the other of the main surfaces with only the quenching portion, the high strength can be ensured. As described above, it is possible to improve the strength of the metal pipe.

### Advantageous Effects of Invention

According to the present disclosure, the forming device, the forming system, and the metal pipe that can improve the strength of the formed product can be provided.

### Brief Description of Drawings

FIG. 1 is a block configuration diagram showing a forming system according to an embodiment of the present disclosure.
FIG. 2 is a schematic configuration diagram showing a forming device according to an embodiment of the present disclosure.
FIG. 3A is a schematic side view showing a heating and expanding unit. FIG. 3B is a cross-sectional view showing a state where a nozzle seals a metal pipe material.
FIG. 4 is a perspective view showing a formed product.
FIG. 5A is a cross-sectional view taken along line Va-Va of FIG. 4, and FIG. 5B is a cross-sectional view taken along line Vb-Vb of FIG. 4.
FIG. 6 is an enlarged perspective view showing a quenching adjustment portion of the formed product.
FIG. 7 is a cross-sectional view showing the quenching adjustment portion of the formed product.
FIGS. 8A to 8C are schematic diagrams showing a forming die.
FIG. 9 is a cross-sectional view showing the forming die.
FIG. 10 is a cross-sectional view showing a quenching adjustment portion of a formed product formed by a forming system according to a modification example.
FIG. 11 is a cross-sectional view showing the forming die.

### Description of Embodiments

Hereinafter, a preferred embodiment of a forming device according to the present disclosure will be described with reference to the accompanying drawings. In the drawings, the same portions or equivalent portions will be denoted by the same reference numerals, and the duplicated description thereof will be omitted.

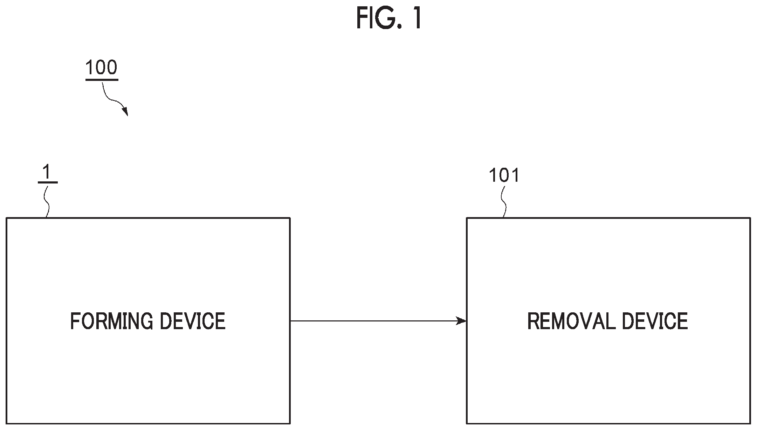

FIG. 1 is a block configuration diagram showing a forming system 100 according to the present embodiment. The forming system 100 is a system that forms a metal material. In the present embodiment, a metal pipe material is used as the metal material. As a result, the metal pipe is formed as a formed product.

As shown in FIG. 1, the forming system 100 includes a forming device 1 and a removal device 101. The forming device 1 is a device that performs quenching by forming the heated metal material by expansion. The forming device 1 forms a metal pipe by a forming method called steel tube air forming (STAF) forming.

The removal device 101 is a device that removes an unnecessary portion from the formed product formed by the forming device 1. Details of the removal device 101 will be described later.

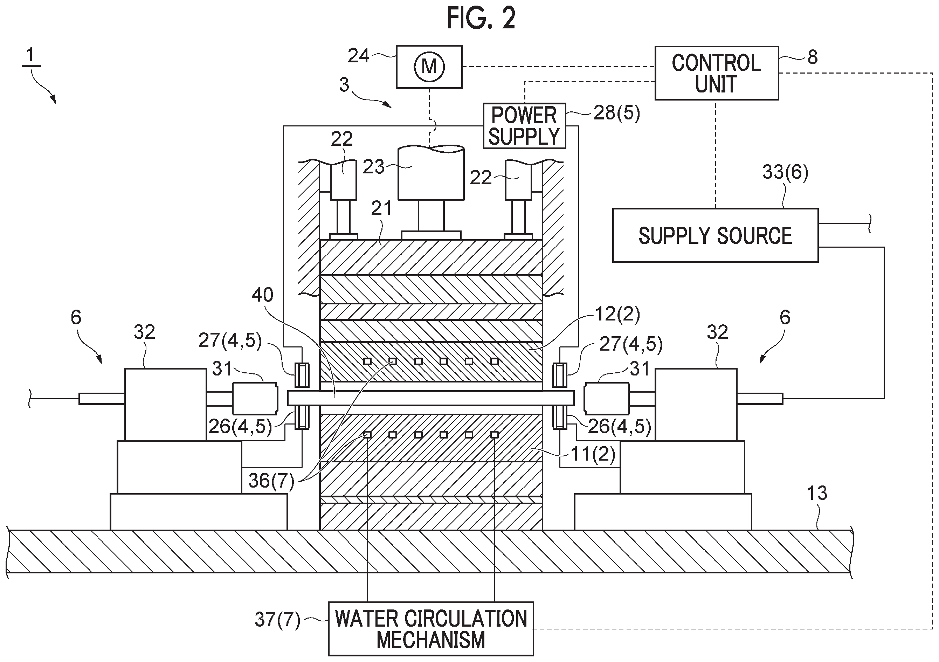

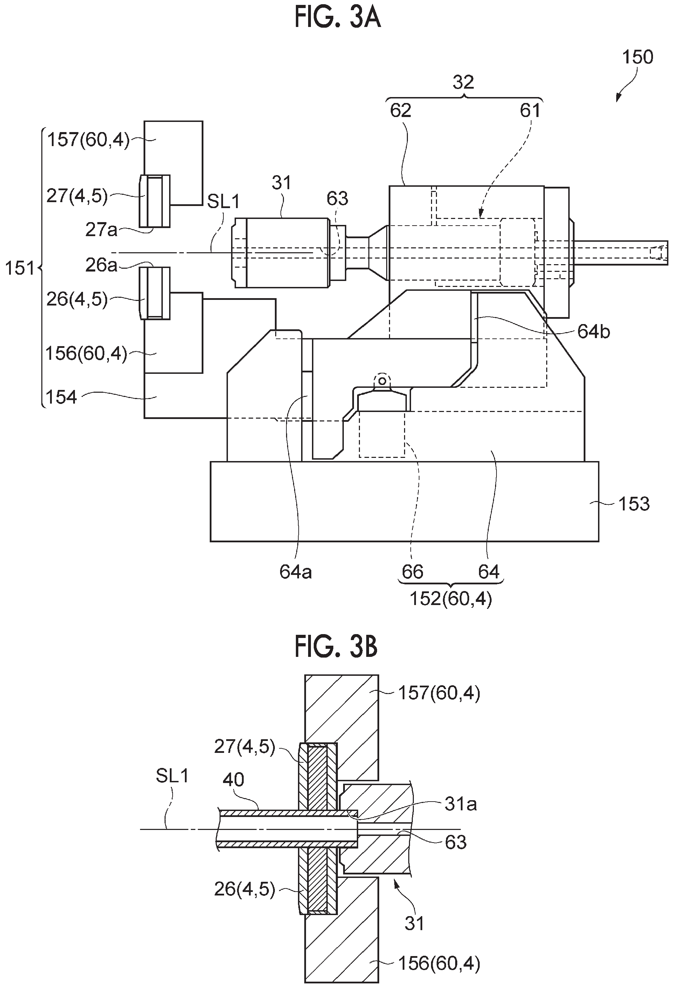

Next, an example of the forming device 1 will be described in detail with reference to FIGS. 2 and 3. FIG. 2 is a schematic configuration diagram of the forming device 1 according to the present embodiment. As shown in FIG. 2, the forming device 1 is a device that forms the metal pipe having a hollow shape by blow forming. In the present embodiment, the forming device 1 is installed on a horizontal plane. The forming device 1 includes a forming die 2, a drive mechanism 3, a holding unit 4, a heating unit 5, a fluid supply unit 6, a cooling unit 7, and a control unit 8. In the present specification, a metal pipe material 40 refers to a hollow article before the completion of the forming by the forming device 1. The metal pipe material 40 is a steel-type pipe material that can be quenched. In addition, in a horizontal direction, a direction in which the metal pipe material 40 extends during the forming may be referred to as a "longitudinal direction", and a direction perpendicular to the longitudinal direction may be referred to as a "width direction".

The forming die 2 is a die that forms the metal pipe from the metal pipe material 40, and includes a lower die 11 and an upper die 12 that face each other in an up-down direction. The lower die 11 and the upper die 12 are formed of blocks made of steel. Each of the lower die 11 and the upper die 12 is provided with a recessed portion in which the metal pipe material 40 is accommodated. In a state where the lower die 11 and the upper die 12 are in close contact with each other (die closed state), the respective recessed portions form a space having a target shape in which the metal pipe material is to be formed. Therefore, the surfaces of the respective recessed portions are forming surfaces of the forming die 2. The lower die 11 is fixed to a base stage 13 via a die holder or the like. The upper die 12 is fixed to a slide of the drive mechanism 3 via a die holder or the like.

The drive mechanism 3 is a mechanism that moves at least one of the lower die 11 and the upper die 12. In FIG. 2, the drive mechanism 3 has a configuration of moving only the upper die 12. The drive mechanism 3 includes a slide 21 that moves the upper die 12 so that the lower die 11 and the upper die 12 are joined together, a pull-back cylinder 22 as an actuator that generates a force for pulling the slide 21 upward, a main cylinder 23 as a drive source that downward-pressurizes the slide 21, and a drive source 24 that applies a driving force to the main cylinder 23.

The holding unit 4 is a mechanism that holds the metal pipe material 40 disposed between the lower die 11 and the upper die 12. The holding unit 4 includes a lower electrode 26 and an upper electrode 27 that hold the metal pipe material 40 on one end side of the forming die 2 in the longitudinal direction, and a lower electrode 26 and an upper electrode 27 that hold the metal pipe material 40 on the other end side of the forming die 2 in the longitudinal direction. The lower electrodes 26 and the upper electrodes 27 on both sides in the longitudinal direction hold the metal pipe material 40 by interposing vicinities of end portions of the metal pipe material 40 from the up-down direction. Upper surfaces of the lower electrodes 26 and lower surfaces of the upper electrodes 27 are formed with groove portions having a shape corresponding to an outer peripheral surface of the metal pipe material 40. Drive mechanisms (not shown) are provided in the lower electrodes 26 and the upper electrodes 27 and are movable independently of each other in the up-down direction.

The heating unit 5 heats the metal pipe material 40. The heating unit 5 is a mechanism that heats the metal pipe material 40 by energizing the metal pipe material 40. The heating unit 5 heats the metal pipe material 40 in a state where the metal pipe material 40 is separated from the lower die 11 and the upper die 12, between the lower die 11 and the upper die 12. The heating unit 5 includes the lower electrodes 26 and the upper electrodes 27 on both sides in the longitudinal direction, and a power supply 28 that causes a current to flow through the metal pipe material 40 via the electrodes 26 and 27. The heating unit may be disposed in a preceding process of the forming device 1 to perform heating externally.

The fluid supply unit 6 is a mechanism that supplies a high-pressure fluid into the metal pipe material 40 held between the lower die 11 and the upper die 12. The fluid supply unit 6 supplies the high-pressure fluid into the metal pipe material 40 that is brought into a high-temperature state by being heated by the heating unit 5, to expand the metal pipe material 40. The fluid supply unit 6 is provided on both end sides of the forming die 2 in the longitudinal direction. The fluid supply unit 6 includes a nozzle 31 that supplies the fluid from an opening portion of an end portion of the metal pipe material 40 into the metal pipe material 40, a drive mechanism 32 that moves the nozzle 31 forward and backward with respect to the opening portion of the metal pipe material 40, and a supply source 33 that supplies the high-pressure fluid into the metal pipe material 40 via the nozzle 31. The drive mechanism 32 brings the nozzle 31 into close contact with the end portion of the metal pipe material 40 in a state where the sealing performance is ensured during the fluid supply and exhaust, and causes the nozzle 31 to be separated from the end portion of the metal pipe material 40 in other cases. The fluid supply unit 6 may supply a gas such as high-pressure air and an inert gas, as the fluid. Additionally, the fluid supply unit 6 may include the heating unit 5 together with the holding unit 4 including a mechanism that moves the metal pipe material 40 in the up-down direction as the same device.

Components of the holding unit 4, the heating unit 5, and the fluid supply unit 6 may be configured as a unitized heating and expanding unit 150. FIG. 3A is a schematic side view showing the heating and expanding unit 150. FIG. 3B is a cross-sectional view showing a state where a nozzle 31 seals a metal pipe material 40.

As shown in FIG. 3A, the heating and expanding unit 150 includes the lower electrode 26, the upper electrode 27, an electrode mounting unit 151 in which the electrodes 26 and 27 are mounted, the nozzle 31, the drive mechanism 32, an elevating unit 152, and a unit base 153. The electrode mounting unit 151 includes an elevating frame 154 and electrode frames 156 and 157. The electrode frames 156 and 157 function as a part of a drive mechanism 60 that supports and moves each of the electrodes 26 and 27. The drive mechanism 32 drives the nozzle 31 and moves up and down together with the electrode mounting unit 151. The drive mechanism 32 includes a piston 61 that holds the nozzle 31, and a cylinder 62 that drives the piston. The elevating unit 152 includes an elevating frame base 64 attached to an upper surface of the unit base 153, and an elevating actuator 66 that applies an elevating operation to the elevating frame 154 of the electrode mounting unit 151 by using these elevating frame bases 64. The elevating frame base 64 includes guide portions 64a and 64b that guide the elevating operation of the elevating frame 154 with respect to the unit base 153. The elevating unit 152 functions as a part of the drive mechanism 60 of the holding unit 4. The heating and expanding unit 150 includes a plurality of unit bases 153 of which the upper surfaces have different inclination angles, and allows collectively change and adjustment of inclination angles of the lower electrode 26, the upper electrode 27, the nozzle 31, the electrode mounting unit 151, the drive mechanism 32, and the elevating unit 152 by replacing the unit bases 153.

The nozzle 31 is a cylindrical member into which the end portion of the metal pipe material 40 can be inserted. The nozzle 31 is supported by the drive mechanism 32 so that a center line of the nozzle 31 coincides with a reference line SL1. An inner diameter of a feed port 31a at an end portion of the nozzle 31 on the metal pipe material 40 side substantially coincides with an outer diameter of the metal pipe material 40 after expansion forming. In this state, the nozzle 31 supplies the high-pressure fluid from an internal flow path 63 to the metal pipe material 40. Examples of the high-pressure fluid include a gas.

Returning to FIG. 2, the cooling unit 7 is a mechanism that cools the forming die 2. The cooling unit 7 can rapidly cool the metal pipe material 40 by cooling the forming die 2 when the expanded metal pipe material 40 comes into contact with the forming surface of the forming die 2. The cooling unit 7 includes flow paths 36 formed inside the lower die 11 and the upper die 12 and a water circulation mechanism 37 that supplies cooling water and causes the cooling water to circulate through the flow paths 36.

The control unit 8 is a device that controls the entire forming device 1. The control unit 8 controls the drive mechanism 3, the holding unit 4, the heating unit 5, the fluid supply unit 6, and the cooling unit 7. The control unit 8 repeatedly performs the operation of forming the metal pipe material 40 using the forming die 2.

Specifically, the control unit 8 controls, for example, a transport timing from a transport device, such as a robot arm, to dispose the metal pipe material 40 between the lower die 11 and the upper die 12 in an open state. Alternatively, a worker may manually dispose the metal pipe material 40 between the lower die 11 and the upper die 12. Additionally, the control unit 8 controls an actuator of the holding unit 4 and the like so that the metal pipe material 40 is supported by the lower electrodes 26 on both sides in the longitudinal direction, and then the upper electrodes 27 are lowered to interpose the metal pipe material 40. In addition, the control unit 8 controls the heating unit 5 to perform resistive heating on the metal pipe material 40. As a result, an axial current flows through the metal pipe material 40, and an electric resistance of the metal pipe material 40 itself causes the metal pipe material 40 itself to generate heat due to Joule heat.

The control unit 8 closes the forming die 2 by controlling the drive mechanism 3 to lower the upper die 12 and bring the upper die 12 close to the lower die 11. On the other hand, the control unit 8 controls the fluid supply unit 6 to seal the opening portions of both ends of the metal pipe material 40 with the nozzle 31 and supply the fluid. As a result, the metal pipe material 40, which is softened by the heating, expands and comes into contact with the forming surface of the forming die 2. Then, the metal pipe material 40 is formed to follow the shape of the forming surface of the forming die 2. In a case where a metal pipe with a flange is formed, a part of the metal pipe material 40 is made to enter a gap between the lower die 11 and the upper die 12, and then die closing is further performed to crush the entering part to form a flange portion. When the metal pipe material 40 comes into contact with the forming surface, the metal pipe material 40 is quenched by being rapidly cooled by the forming die 2 cooled by the cooling unit 7.

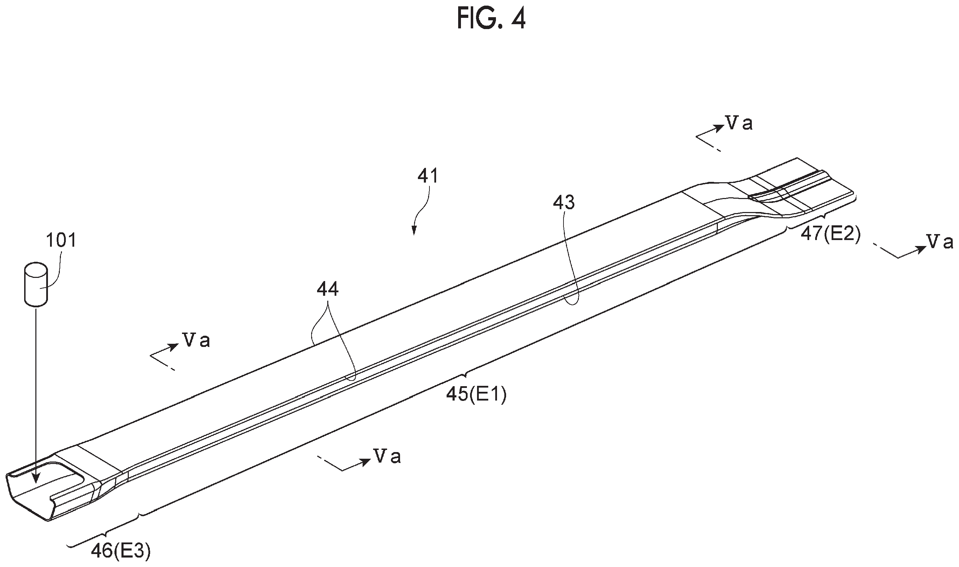

The formed product 41 will be described with reference to FIG. 4. The formed product 41 shown in FIG. 4 is in a state after the unnecessary portion is cut by the removal device 101. The formed product 41 includes a forming main body portion 45 having a pipe portion 43 and a flange portion 44, an end portion region 46 on one end side in the longitudinal direction, and an end portion region 47 on the other end side.

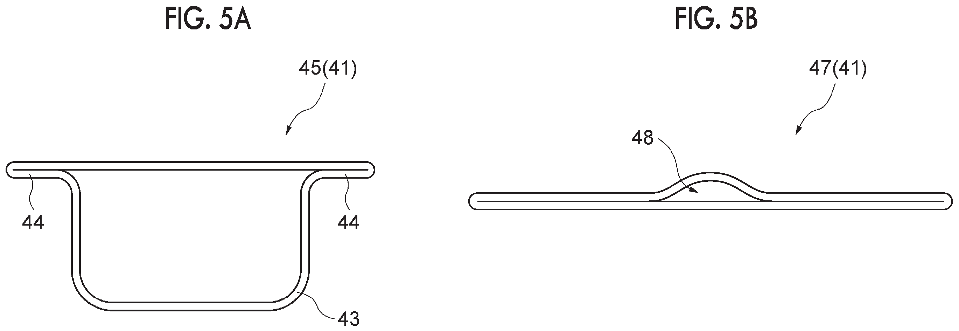

The forming main body portion 45 is a portion extending in the longitudinal direction with a substantially constant cross-sectional shape. As shown in FIG. 5A, the pipe portion 43 is a hollow portion having a rectangular ring shape. The flange portion 44 is a plate-shaped portion protruding from both sides of the pipe portion 43 in the width direction by crushing a part of the metal pipe material 40. As shown in FIG. 5B, the end portion region 47 on the other end side is formed in a flat plate shape by crushing the metal pipe material 40. An air vent hole 48 is formed by a tube wall protruding in a ridged shape on one side in a thickness direction of the end portion region 47.

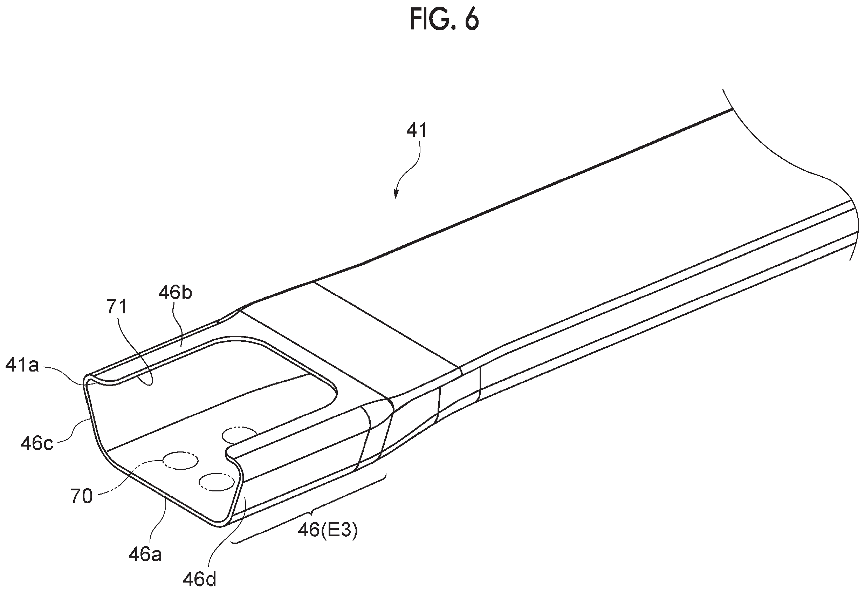

As shown in FIG. 6, the end portion region 46 on one side has a trapezoidal cross-sectional shape. The end portion region 46 includes a main surface 46a corresponding to an upper side of the trapezoid, a main surface 46b corresponding to a lower side, and a pair of side surfaces 46c and 46d that are inclined. The main surface 46a is joined to another member, and is welded at a welded portion 70. A notch portion 71 is formed on the main surface 46b at a portion facing the welded portion 70. The notch portion 71 is formed in a shape and a range in which a welding tool can access the welded portion 70 from the main surface 46b side. The notch portion 71 is formed to extend from one end portion 41a of the formed product 41 to the inner side in the longitudinal direction.

Next, a quenching mode of the formed product 41 will be described. As shown in FIG. 4, in the formed product 41, the forming main body portion 45 is a quenching portion E1 that is normally quenched. In the quenching portion E1, the entire circumference in the cross section is quenched. In the quenching portion E1, each portion in the circumferential direction is hardened by quenching. The end portion region 47 on the other side is a non-quenching portion E2 that is not quenched. In the non-quenching portion E2, each portion in the circumferential direction is softened by not being quenched.

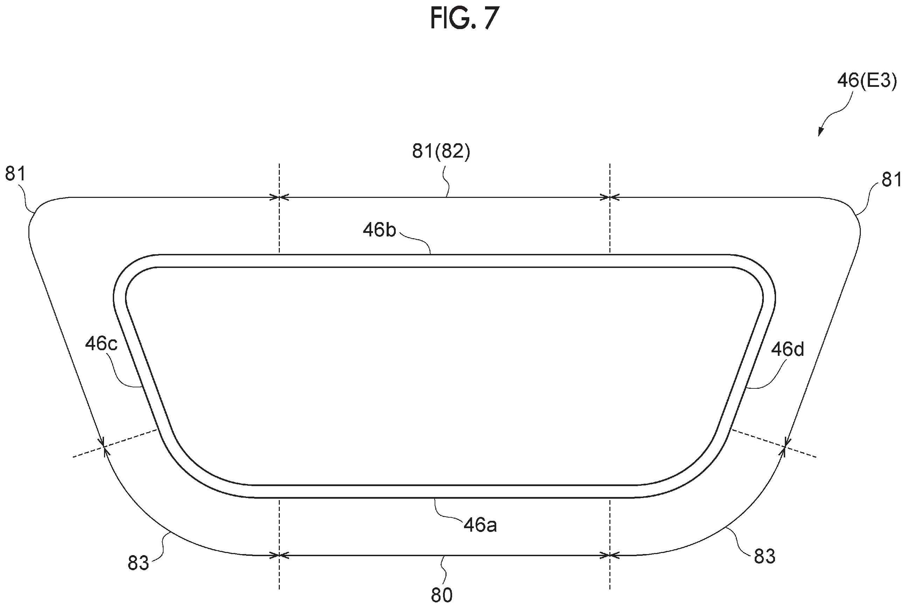

The end portion region 46 on one side is a quenching adjustment portion E3 in which the quenching mode is adjusted. In the quenching adjustment portion E3, a part of the cross section is quenched and the other part is not quenched. As shown in FIG. 7, the main surface 46a on which the welded portion 70 is formed is a non-quenching portion 80 that is not quenched. The main surface 46b facing the main surface 46a and the side surfaces 46c and 46d are quenching portions 81 that are quenched. Among these, a region on the central side of the main surface 46b is a portion to be cut 82 that is removed as the notch portion 71. A corner portion between the main surface 46a and the side surface 46c and a corner portion between the main surface 46a and the side surface 46d are transition sections 83 that transition from the non-quenching portion 80 to the quenching portion 81. The strength of the transition section 83 is intermediate between the strength of the non-quenching portion 80 and the strength of the quenching portion 81.

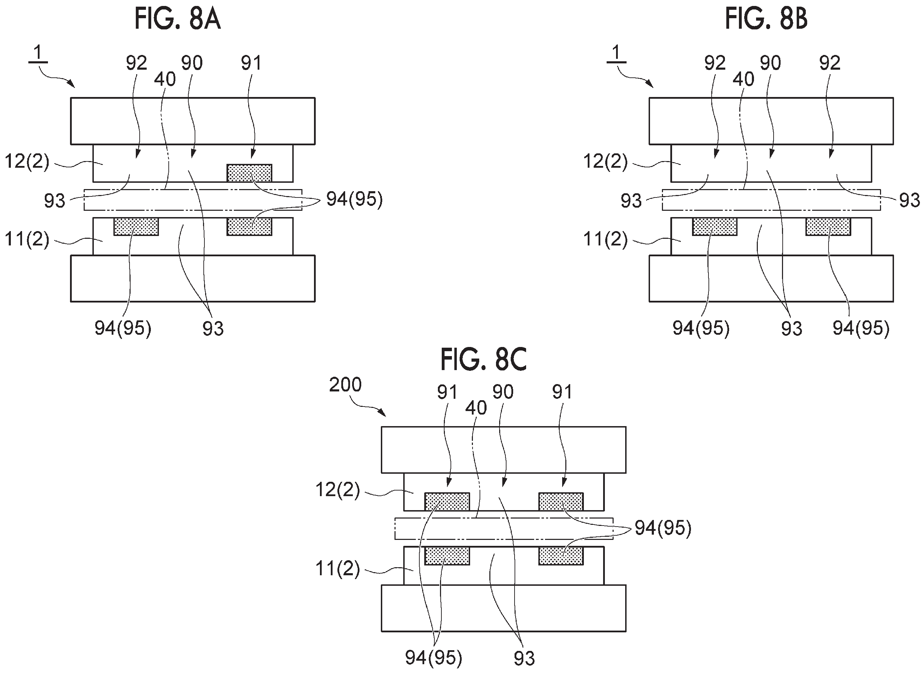

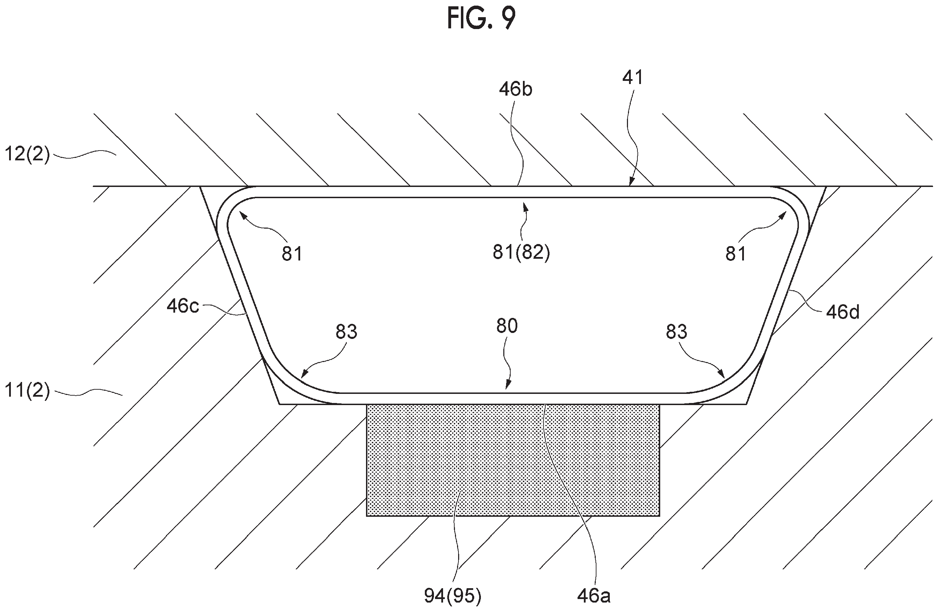

A configuration of the forming die 2 for forming the formed product 41 in which the quenching and the non-quenching are adjusted as described above will be described with reference to FIGS. 8A to 8C and 9. FIGS. 8A to 8C are side views of the forming die 2 when viewed from the side. As shown in FIG. 8A, the forming die 2 includes a quenching region 90 that forms the quenching portion E1 and a non-quenching region 91 that forms the non-quenching portion E2. In the quenching region 90, a quenching mechanism 93 that performs only the quenching on the metal pipe material 40 is provided in both the dies 11 and 12. The quenching mechanism 93 does not have a portion that does not perform the quenching on the corresponding portion of the metal pipe material 40. In the non-quenching region 91, a non-quenching mechanism 94 that does not perform the quenching on the metal pipe material 40 is provided in both the dies 11 and 12.

The forming die 2 includes a quenching mode adjustment region 92 that forms the quenching adjustment portion E3. That is, the lower die 11 (first die) and the upper die 12 (second die) have the quenching mode adjustment region 92 that adjusts the quenching mode of at least a partial region of the metal pipe material 40. As described above, the quenching mode adjustment region 92 is provided at a position corresponding to the end portion of the metal pipe material 40 in the longitudinal direction. In the quenching mode adjustment region 92, the quenching mechanism 93 that performs only the quenching on the metal pipe material 40 is provided in one die 12, and the non-quenching mechanism 94 that does not perform the quenching on the metal pipe material 40 is provided in the other die 11.

The non-quenching mechanism 94 is formed by a heating unit 95 provided in the dies 11 and 12. In the quenching mode adjustment region 92, the non-quenching mechanism 94 is formed by the heating unit 95 provided in the other die 11. As the heating unit 95, for example, a medium such as steam or hot water, a heater, or electromagnetic induction may be used. The heating unit 95 heats the forming surface or the metal pipe material 40 itself, thereby inhibiting the metal pipe material 40 from being rapidly cooled during the forming. As a result, the quenching is not performed at the portion corresponding to the non-quenching mechanism 94. However, the mechanism for configuring the non-quenching mechanism 94 is not limited to the heating unit 95, and, for example, a mechanism that partially inhibits the cooling of the cooling unit 7 in the dies 11 and 12 may be provided. The quenching mechanism 94 is configured by not providing the heating unit 95 to the dies 11 and 12 such that the cooling function of the dies 11 and 12 is exhibited.

Specifically, as shown in FIG. 9, the heating unit 95 of the non-quenching mechanism 94 is provided at a position corresponding to the non-quenching portion 80 in the main surface 46a of the lower die 11. The heating unit 95 is not provided at a position corresponding to the transition section 83 and the quenching portion 81 in the die 11. In addition, the heating unit 95 is not provided in the upper die 12.

The main surface 46b of the formed product 41 that is a surface facing the non-quenching portion 80 formed by the non-quenching mechanism 94 is removed by the removal device 101.

The metal pipe as the formed product 41 has a pipe portion (the forming main body portion 45 and the end portion region 46) having a pair of main surfaces and a pair of side surfaces. In the metal pipe as the formed product 41, the quenching portion 81 is provided on the upper main surface 46b, and a non-quenching portion 89 is provided on the lower main surface 46a in the end portion region 46. In the forming main body portion 45, the quenching portion is provided on both the upper main surface and the lower main surface. Therefore, in the metal pipe as the formed product 41, the quenching portion and the non-quenching portion are provided on the lower main surface of the pipe portion along the axial direction (longitudinal direction) of the metal pipe, and only the quenching portion is provided on the upper main surface of the pipe portion along the axial direction. In addition, the other end portion region 47 does not correspond to the pipe portion.

Next, the operations and effects of the forming system 100 and the forming device 1 according to the present embodiment will be described.

A forming device 200 according to a comparative example will be described with reference to FIG. 8C. In the forming device 200, the non-quenching region 91 is formed at positions corresponding to both end portions of the metal pipe material 40. In this case, the non-quenching portion 80 is formed over the entire circumference of the end portion region 46. In this case, the strength is also reduced not only at a location at which the welded portion 70 is formed, but also on the side surfaces 46c and 46d and the main surface 46b. Therefore, there is a problem that the deformation is concentrated in the end portion region 46 and sufficient strength of the formed product cannot be obtained.

On the other hand, in the forming device 1 according to the present embodiment, the dies 11 and 12 have the quenching mode adjustment region 92 that adjusts the quenching mode of at least a partial region of the metal pipe material 40. As a result, it is possible to adjust the strength of the formed product 41. Specifically, in the quenching mode adjustment region 92, the quenching mechanism 93 that performs only the quenching on the metal pipe material 40 is provided in one die 12, and the non-quenching mechanism 94 that does not perform the quenching on the metal pipe material 40 is provided in the other die 11 (see FIGS. 8A and 8B). The quenching mechanism 93 can increase the strength by performing the quenching on the metal pipe material 40. The non-quenching mechanism 94 can form a portion having low strength in a partial manner depending on the application by not performing the quenching on the metal pipe material 40. Therefore, in the formed product 41, the strength can be reduced at a portion in which the strength is preferably reduced in a partial manner, such as the welded portion 70, and high strength can be ensured by performing the quenching at the other portions. As described above, it is possible to improve the strength of the formed product 41.

The quenching mode adjustment region 92 may be provided at a position corresponding to the end portion of the metal pipe material 40 in the longitudinal direction. Since the welded portion 70 or the like is easily formed at the end portion of the formed product 41, the strength can be adjusted at the position.

The non-quenching mechanism 94 may be formed by the heating unit 95 provided in the other die 11. As a result, the formed product 41 is inhibited from being rapidly cooled at the portion of the non-quenching mechanism 94, and the quenching is inhibited.

The forming system 100 according to one aspect of the present embodiment includes the forming device 1 and the removal device 101 that removes the main surface 46b of the formed product 41 facing the non-quenching portion 80 formed by the non-quenching mechanism 94. As a result, when the welded portion 70 is formed at the non-quenching portion 80, the welding tool can be easily inserted by removing the facing main surface 46b.

The metal pipe according to one aspect of the present embodiment includes: a pipe portion having a pair of main surfaces and a pair of side surfaces, in which one of the main surfaces of the pipe portion is provided with a quenching portion and a non-quenching portion along an axial direction of the metal pipe, and the other of the main surfaces of the pipe portion is provided with only the quenching portion along the axial direction. In this case, in the metal pipe, at the one of the main surfaces, the strength can be reduced at a portion in which the strength is preferably reduced in a partial manner, such as the welded portion, as the non-quenching portion, and the other portions can be formed as the quenching portion, so that the high strength can be ensured. In addition, by configuring the other of the main surfaces with only the quenching portion, the high strength can be ensured. As described above, it is possible to improve the strength of the metal pipe.

The present disclosure is not limited to the above-described embodiment.

For example, as shown in FIG. 8B, the quenching mode adjustment region 92 may be provided at positions corresponding to both end portions of the metal pipe material in the forming die 2. In addition, the non-quenching mechanism 94 may be provided in the upper die 12, and the quenching mechanism 93 may be provided in the lower die 11.

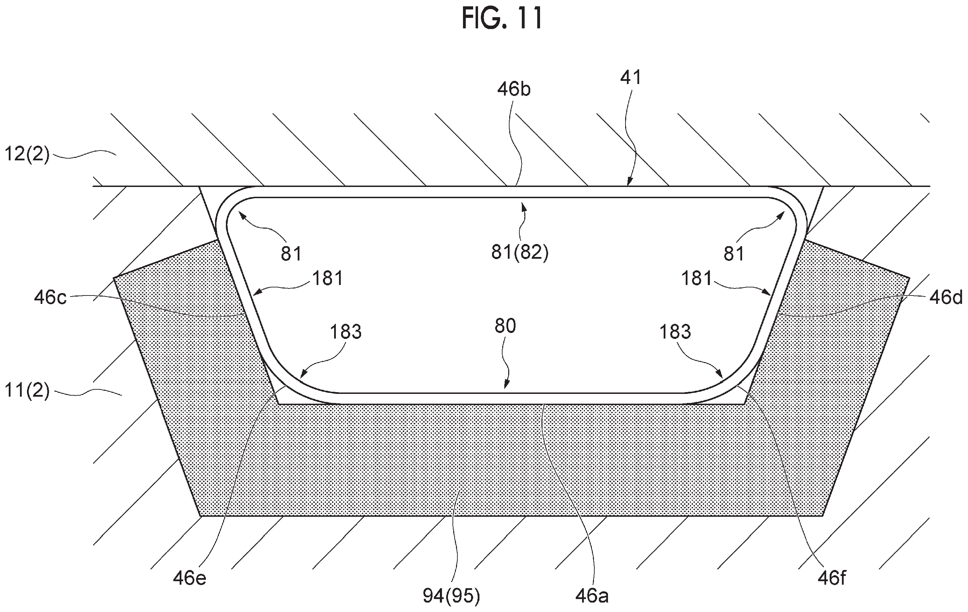

As shown in FIG. 11, the dies 11 and 12 have a pair of main surfaces 46a and 46b and a pair of side surfaces 46c and 46d facing each other in the quenching mode adjustment region 92. The non-quenching mechanism 94 may be non-quenching at one main surface 46a and the pair of side surfaces 46c and 46d. In this case, it is possible to improve the weldability between the side surfaces 46c and 46d and the mating member.

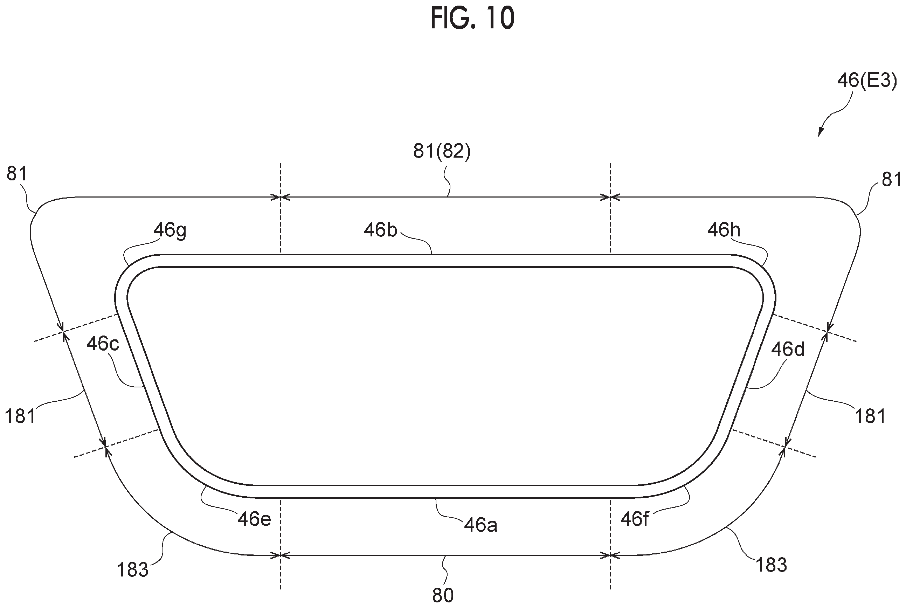

Specifically, as shown in FIG. 10, the main surface 46a on which the welded portion 70 is formed is the non-quenching portion 80 that is not quenched. Further, the side surfaces 46c and 46d are non-quenching portions 181. The lower corner portions 46e and 46f are non-quenching portions 183. The main surface 46b facing the main surface 46a and the upper corner portions 46g and 46h are the quenching portions 81 that are quenched. FIG. 11 is a cross-sectional view showing the forming die 2 for forming the formed product 41. As shown in FIG. 11, the non-quenching mechanism 94 is provided not only at a portion in contact with the lower main surface 46a, but also at a portion in contact with the lower corner portions 46e and 46f and a portion in contact with the side surfaces 46c and 46d.

The shape of the formed product to be formed (die shape in the quenching mode adjustment region 92) is not particularly limited.

The configuration of the forming device 1 is not particularly limited, and may be changed from the structures shown in FIGS. 2 and 3.

### Reference Signs List

- 1: Forming device
- 40: Metal pipe material (metal material)
- 41: Formed product (metal pipe)
- 92: Quenching mode adjustment region
- 93: Quenching mechanism
- 94: Non-quenching mechanism
- 95: Heating unit
- 100: Forming system
- 101: Removal device

## Claims

1. A forming device comprising a first die and a second die for forming a metal material,
wherein the first die and the second die have a quenching mode adjustment region that adjusts a quenching mode of at least a partial region of the metal material, and
in the quenching mode adjustment region, one die of the first die and the second die is provided with a quenching mechanism that only performs quenching on the metal material, and the other die of the first die and the second die is provided with a non-quenching mechanism that does not perform the quenching on the metal material.

2. The forming device according to claim 1,
wherein the quenching mode adjustment region is provided at a position corresponding to an end portion of the metal material in a longitudinal direction.

3. The forming device according to claim 1,
wherein the non-quenching mechanism is formed by a heating unit provided in the other die.

4. The forming device according to claim 1,
wherein the first die and the second die have a pair of main surfaces facing each other and the pair of side surfaces in the quenching mode adjustment region, and
the non-quenching mechanism does not perform the quenching on one of the main surfaces and the pair of side surfaces.

5. A forming system comprising:
the forming device according to any one of claims 1 to 3; and
a removal device that removes a surface of a formed product facing a non-quenching portion formed by the non-quenching mechanism.

6. A metal pipe comprising:
a pipe portion having a pair of main surfaces and a pair of side surfaces,
wherein one of the main surfaces of the pipe portion is provided with a quenching portion and a non-quenching portion along an axial direction of the pipe portion, and
the other of the main surfaces of the pipe portion is provided with only the quenching portion along the axial direction.
